Europäisches Patentamt

(19) European Patent Office

Office européen des brevets

(11) Publication number: **0 111 901**
**B1**

(12) **EUROPEAN PATENT SPECIFICATION**

(45) Date of publication of patent specification: **05.11.86**

(51) Int. Cl.⁴: **C 03 B 37/025**

(21) Application number: **83112640.4**

(22) Date of filing: **15.12.83**

(54) Process for eliminating the axial refractive index depression in optical fibres.

(30) Priority: **16.12.82 IT 6847682**

(43) Date of publication of application:
**27.06.84 Bulletin 84/26**

(45) Publication of the grant of the patent:
**05.11.86 Bulletin 86/45**

(84) Designated Contracting States:
**AT BE CH DE FR GB LI NL SE**

(56) References cited:
**EP-A-0 087 061**
**GB-A-2 009 137**
**US-A-4 304 581**

(73) Proprietor: **CSELT Centro Studi e Laboratori
Telecomunicazioni S.p.A.
Via Guglielmo Reiss Romoli, 274
I-10148 Turin (IT)**

(72) Inventor: **Roba, Giacomo
Via Allegro 63/5
Genova-Cogoleto (IT)**

(74) Representative: **Riederer Freiherr von Paar zu
Schönau, Anton et al
Freyung 615 Postfach 2664
D-8300 Landshut (DE)**

# 0 111 901

**Description**

The present invention relates to the methods of fabricating physical carriers for optical telecommunications systems and more particularly it concerns a process of eliminating the axial refractive-index depression on optical fibres obtained by a MCVD process (Modified Chemical Vapour Deposition).

This process, developed for fabricating optical fibres made of high-silica content glass, allows extremely low attenuation values of the light radiation to be attained. Single-mode fibres can thus be obtained, with a core made of the ternary compound $SiO_2 - P_2O_5 - GeO_2$ or of the binary compound $SiO_2 - GeO_2$, with minimum attenuation values of about 0,2 dB/km and 0,15 dB/km within the wavelength range referred to as the third transmission window (1,5—1,6 μm).

The process comprises two main steps:

a) chemical-vapour deposition of glass layers, of a thickness comprised between 10 and 50 μm, inside a silica-glass tube;

b) thermal collapsing of the tube into a vitreous, transparent cylindrical rod (preform) having a diameter comprised between 10 and 30 mm.

A geometrically-equivalent fibre having a diameter of 125 μm is drawn from the preform.

During both steps, diffusion and evaporation of dopants ($GeO_2$ and $P_2O_5$) take place, originating a central depression of the refractive-index which is typical of the MCVD process.

This depression, which generally involves the last-deposited layers, i.e. the most internal layers, increases with the thermal stress the preform is to undergo during the fabrication phase and with the dopant volatility.

It is known that this perturbation in the refractive-index profile is detrimental to multimode-fibre bandwidth.

More deleterious effects result in single-mode fibres, in which the volume involved in the inside diffusion and surface evaporation processes, i.e. the zone in which the refractive-index depression occurs, is wide if compared to that of the core.

The electromagnetic-field guidance conditions and various trnsmissive properties of these fibres are perturbed. More particularly, "microbending" losses are higher in MCVD — fabricated single-mode fibres with respect to the fibres with the same characteristics fabricated by outside deposition processes (OVD = outside vapour deposition or VAD = vapour axial deposition) which do not entail the axial perturbation in the refractive-index profile.

However, the MCVD process, owing to the greater flexibility it presents in the dopant choice and in the refractive index profile realization, seems more suited to the construction of single-mode fibres optimized both in attenuation and in dispersion characteristics.

In fact, it allows the realization of particular refractive-index profiles (depressed-index-cladding; w-type; triangular shape), in order to shift the minimum dispersion in the spectral zone in which silica presents the minimum value of optical attenuation.

The opportunity of reducing this perturbation is evident.

Various methods have been suggested of reducing the refractive-index depression just in the preform.

A number of these methods are based on the chemical etching of silica inside the tube before the start of the collapse or when the collapse has been partly started ("Une méthode nouvelle pour réduire le trou central et le contenu en ions OH⁻ des préformes MCVD", Scheider H. et al, pages 36—40, 8th ECOC 1982). Such methods introduce a further step in the MCVD process and at present allow only partial results.

Other methods are based on the elimination of the depression in the refractive-index profile by excess doping of the last-deposited layers ("Fabrication of graded-index fibres without an index dip by chemical vapor deposition method", T. Akamatsu et al., pages 515—517, Applied Physics Letters, Vol. 31, No. 8, 15th October, 1977) or by collapsing the preform while a flow of vaporized dopant only or of gaseous reactants for dopant production (US—A—4 304 581) is passed through the preform tube.

Said methods, however, present a lot of reproducibility problems and also for them only partial results are obtained. In fact, they are effective only during the "pre-collapsing" steps, i.e. when the preform inner diameter is thermally gradually reduced.

Up to now no intervention has been provided in the last collapsing cycle, in which the internal cavity is completely eliminated to let the preform assume the final rod condition.

Once the preform is closed, as flows cannot be maintained inside, consequently a large portion of the dopant goes towards the preform internal surface which is still free and evaporates depending on its vapour pressure at the collapsing temperature.

The disadvantages above are overcome by the method provided by the present invention, which allows for the elimination of the refractive-index profile depression in MCVD fabricated preforms and requires neither additional devices, nor further long-duration phases during preform production.

The particular object of the present invention is a method of eliminating the refractive-index profile depression in optical fibres whereby the preform is obtained by deposition of raw material and of dopants inside a supporting tube and in the collapsing step a vapour of dopant of the same kind as that used for fabricating the preform is provided inside the tube. According to the invention, this method is carried out as characterized in claim 1.

The above and further preferred features of the invention will become clearer from the following

2

**0 111 901**

description of a preferred embodiment thereof, given by way of example and not in a limiting sense and illustrated with reference to the accompanying drawing, which representa a partly-collapsed optical fibre preform.

The method provided by the present invention solves the above problems causing the presence inside the tube of a dopant vapour at a pressure equal to the vapour pressure of the dopant incorporated in the matrix, at the collapsing temperature.

A perfect balance is thus obtained between the dopant ejected from the matrix owing to evaporation and that re-incorporated by adsorption, even when the last collapsing cycle is carried out in the absence of flow.

The necessary pressure is obtained inside the supporting tube denoted by 1 in the Figure, causing a dopant layer 2 to evaporate during the collapsing step, which layer had been previously deposited as an oxide ($GeO_2$, $P_2O_5$) on the most internal layer of the doped silica, and which had not been incorporated into matrix 3 itself.

In this way the pressurization effect is exclusively local, as it takes place in the zone of the collapse meniscus, comprised in the Figure between two vertical dotted lines 4, 5. On the contrary, the redeposition of the dopant, evaporated in the high-temperature zone, takes place upstream of the meniscus.

As a consequence, a possible inconvenience can arise if the initial mass concentration of the dopant layer is constant along the tube axis. In fact, during the collapsing step the concentration becomes equal to the sum of the initial concentration and of that due to evaporation-redeposition, which sum is represented by a diverging function. Hence the tendency would be towards an accumulation of dopant during the axial translation of the meniscus zone, up to the shift of the evaporation/adsorption equilibrium increasingly more towards adsorption, even with the tendency towards the incorporation of only dopant in the preform.

To keep a uniform dopant layer during the collapsing step an initial dopant layer has to be deposited with a suitable variation of the mass concentration along the preform axis. To obtain such variation the initial conditions (mass quantity which by evaporating generates an inside pressure of vapour equal to the pressure of the dopant at that temperature) and the evaporation redeposition law must be determined.

Once the redeposition function is known the preventive axial deposition can be determined by imposing the sum between the two functions to be kept constant at each point of the preform axis. The two functions must then be complementary.

In turn, to obtain the axial deposition function, the dopant deposition law in a reactant flow must be known.

A part of the evaporated mass is directly redeposited upstream of the meniscus zone according to the same law and a part enters the meniscus zone contributing to the vapour pressure necessary to counterbalance the dopant diffusion inside the preform. The second dopant part is redeposited after a reflection operated by the meniscus, and is added to the first part by a different law which may also depend on the geometry of the meniscus zone.

The function which expreses the variation of the dopant thickness along preform axis z, before the collapsing, is denoted by $h_0(z)$.

In the approximation the meniscus has a focusing reflective surface, and the following expression is given:

$$h_0(z) = \frac{h_0}{2\pi} \left\{ \pi \cdot \left[ 1 - \frac{z}{\pi D} \cdot k \cdot K(k) \right] + 2 \text{ arctg } \frac{D}{2z} \right\}$$

where

$$k = D \cdot (z^2 + D^2)^{-1/2}$$

$$K(k) = \int_0^{\pi/2} (1 - k^2 \sin^2 \zeta)^{-1/2} d\zeta$$

$h_0$ is the initial dopant thickness
D is the internal preform diameter before collapse
$\varphi$ is the angle comprised between the internal preform diameter and a chord of a circle resulting from the cross section of the preform.

The mass quantity $m^*$ necessary to generate a pressure level capable of compensating for the dopant vapour pressure is given by the relation:

$$m^* = \frac{p V}{RT} \cdot M$$

3

where:

p is the dopant vapour pressure in the collapse state;

V is the meniscus volume comprised between dashed vertical lines 4 and 5;

T is the absolute temperature in the collapse state;

M is the dopant molar mass.

The compensate the dopant vapour pressure during the whole collapsing process the following relationship is to be satisfied:

$$h_0 = \frac{l}{\pi \rho D} \cdot \frac{m^*}{\zeta}$$

where:

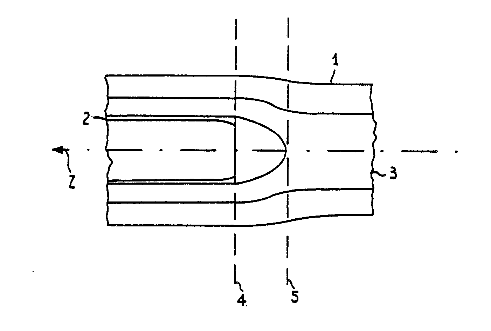

$\zeta$ is the distance between sections 4 and 5 of Fig. 1, i.e. the meniscus-height

$\rho$ is deposited dopant density.

The layer can be practically deposited after determining the trend of its thickness.

Dopant back-diffusion risks can be avoided by depositing the layer in non-close contact with preform material; that can be achieved by applying a layer of porous colloidal dopant, deposited at low temperature.

The deposition process can be effected in two different ways.

By a first method one varies the reactant flow from which the dopant is continuously originated by synthesis, according to the function $h_0(z)$, during the furnace axial motion. The furnace, usually used for MCVD process, is now used at lower temperature, inferior to the matrix annealing temperature ($l \, n \, \eta = 13$; $\eta$ = viscosity), to obtain the porous layer.

By another method the furnace translatory speed is continuously varied according to the function $h_0(z)$.

Once the dopant layer deposition is over, the last collapsing step can be carried out which provides the total closure of the preform internal cavity, starting from the extremity with a layer thickness equal to $h_0$.

**Claims**

1. Method of eliminating the axial refractive-index depression in optical fibres obtained by a process in which a preform is fabricated by deposition of raw materials and of dopants inside a supporting tube, wherein inside the tube (1) a vapour of dopant, of the same kind as that used for fabricating the preform, is generated in the collapsing step, characterized in that said vapour of dopant is generated by heating a layer of dopant (2) deposited inside the preform on the most internal layer of the deposited raw materials, this vapour having a value of pressure equal to the pressure of the dopant itself at the preform collapsing temperature and said layer presenting a thickness variation along the axis z of the supporting tube given by the following function $h_0(z)$,

$$h_0(z) = \frac{h_0}{2\pi} \left\{ \pi \cdot \left[ 1 - \frac{z}{\pi D} \cdot k \cdot K(k) \right] + 2 \, \text{arctg} \, \frac{D}{2z} \right\}$$

with:

$$k = D \cdot (z^2 + D^2)^{-1/2} \, , \quad h_0 = \frac{1}{\pi \rho D} \cdot \frac{m^*}{\zeta}$$

$$K(k) = \int_0^{\pi/2} (1 - k^2 \sin^2 \zeta)^{-1/2} d\zeta$$

where:

$h_0$ is the initial thickness of the dopant allowing compensation for vapour pressure,

$\zeta$ is the meniscus height,

D is the internal diameter of the preform before the collapsing,

$\rho$ is the deposited dopant density,

$\varphi$ is the angle comprised between a diameter and a chord of the circle resulting from the preform cross section.

$m^*$ is the mass quantity apt to generate a pressure able to compensate for the dopant vapour pressure, given by the relation:

$$m^* = \frac{p\,V}{RT} \cdot M$$

where:

P is the dopant vapour pressure in the collapse state;

V is the meniscus volume;

T is the absolute temperature in the collapse state;

M is the dopant molar mass.

2. Method according to claim 1, characterized in that said layer (2) is made of a colloidal dopant with a porous structure, deposited at low temperature after the deposition of raw materials inside the preform.

3. Method according to claim 1 or 2, characterized in that said dopant layer is realized by continuously changing, according to the function $h_0(z)$, the flow of reactants in the vapour state, from which the dopant is obtained by synthesis.

4. Method according to claim 1 or 2, characterized in that said dopant layer is realized by continuously changing, according to the function $h_0(z)$, the translation speed of a means helping the synthesis reaction among the reactants in vapour phase, from which the dopant is obtained.

**Patentansprüche**

1. Verfahren zur Eliminiation des axialen Brechzahleinbruchs bei Lichtleitfasern, die durch einen Prozeß hergestellt werden, bei dem eine Vorform durch Niederschlagung von Ausgangsmaterialien und von Dotierungsstoffen innerhalb eines Trägerrohrs hergestellt wird, wobei innerhalb des Rohrs (1) ein Dampf von Dotierungsstoff der gleichen Art wie der für die Herstellung der Vorform verwendete Dotierungsstoff im Kollabierschritt erzeugt wird, dadurch gekennzeichnet, daß man den Dampf des Dotierungsstoffs durch Erhitzen einer Dotierungsstoffschicht (2) erzeugt, die innerhalb der Vorform auf der innersten Schicht der niedergeschalgenen Ausgangsmaterialien aufgebracht ist, wobei der Dampf einen Druckwert gleich dem Druck des Dotierungsstoffs selbst bei der Kollabiertemperatur der Vorform hat und die Schicht entlang der Achse z des Trägerrohrs eine Dickenänderung aufweist, die durch die folgende Funktion $h_0(z)$ gegeben ist:

$$h_0(z) = \frac{h_0}{2\pi}\left\{\pi \cdot \left[1 - \frac{z}{\pi D} \cdot k \cdot K(k)\right] + 2\, \text{arctg}\, \frac{D}{2z}\right\}$$

mit:

$$k = D \cdot (z^2 + D^2)^{-1/2}, \quad h_0 = \frac{1}{\pi \rho D} \cdot \frac{m^*}{\zeta}$$

$$K(k) = \int_0^{\pi/2} (1 - k^2 \sin^2\zeta)^{-1/2} d\zeta$$

wobei:

$h_0$ = Anfangsdicke des eine Kompensation für den Dampfdruck ermöglichenden Dotierungsstoffs;

$\zeta$ = Höhe der Kehle;

D = Innendurchmesser der Vorform vor dem Kollabieren;

p = Dichte des niedergeschlagenen Dotierungsstoffs;

$\varphi$ = Winkel zwischen einem Durchmesser und einer Sehne des aus dem Querschnitt der Vorform resultierenden Kreises;

$m^*$ = zur Erzeugung eines Drucks, der den Dampfdruck des Dotierungsstoffs kompensieren kann, befähigte Massenquantität gemäß der Beziehung:

$$m^* = \frac{p\,V}{RT} \cdot M$$

wobei:

p = Dampfdruck des Dotierungsstoffs im Kollabierzustand;

V = Volumen der Kehle;

T = absolute Temperatur im Kollabierzustand;

M = molare Masse des Dotierungsstoffs.

2. Verfahren nach Anspruch 1, dadurch gekennzeichnet, daß man die Schicht (2) aus einem kolloidalen Dotierungsstoff mit poröser Struktur herstellt, der bei niedriger Temperatur nach der Niederschlagung der Rohmaterialien in die Vorform eingebracht wird.

3. Verfahren nach Anspruch 1 oder 2, dadurch gekennzeichnet, daß man die Schicht des Dotierungsstoffs dadurch realisiert, daß man den Strom von dampfförmigen Reagenzien, aus denen der Dotierungsstoff durch Synthese erhalten wird, gemäß der Funktion $h_0(z)$ kontinuierlich ändert.

4. Verfahren nach Anspruch 1 oder 2, dadurch gekennzeichnet, daß man die schicht des Dotierungsstoffs dadurch realisiert, daß man die Versatszgeschwindigkeit einer die Synthesereaktion der Reagenzien in der Dampfphase, aus denen der Dotierungsstoff erhalten wird, unterstützenden Einrichtung gemäß der Funktion $h_0(z)$ kontinuierlich ändert.

**Revendications**

1. Méthode pour éliminer la baisse axiale de l'indice de réfraction de fibres optiques obtenues par un procédé suivant lequel la préforme est réalisée en déposant les matières constitutives du verre et les agents dopeurs à l'intérieur d'un tube de support, où une vapeur de l'agent dopeur, du même type que celui utilisé pour la fabrication de la préforme, est engendrée dans le tube (1) dans la phase d'affaissement, caractérisée en ce que ladite vapeur de l'agent dopeur est obtenue par le chauffage d'une couche de l'agent dopeur (2), déposée dans la préforme sur la couche la plus interne des matières constitutives du verre déposées, ladite vapeur ayant une pression de valeur égale à la pression de l'agent dopeur même à la température d'affaissement de la préforme et ladite couche ayant une variation de l'épaisseur le long de l'axe z du tube de support fournie par la fonction $h_0(z)$ suivante:

$$h_0\,(z) = \frac{h_0}{2\pi} \left\{ \pi \cdot \left[ 1 - \frac{z}{\pi D} \cdot k \cdot K\,(k) \right] + 2\,\text{arctg}\,\frac{D}{2z} \right\}$$

avec:

$$k = D \cdot (z^2 + D^2)^{-1/2} \quad , \quad h_0 = \frac{1}{\pi \rho D} \circ \frac{m^*}{\zeta}$$

$$K\,(k) = \int_0^{\pi/2} (1 - k^2 \sin^2 \zeta)^{-1/2} d\zeta$$

où:

$h_0$ est l'épaisseur initial de l'agent dopeur qui permet la compensation de la pression de vapeur;

$\zeta$ est la hauteur du ménisque;

D est le diamètre interne de la préforme avant l'affaissement;

$\rho$ est la densité de l'agent dopeur déposé;

$\varphi$ est l'angle compris entre un diamètre et une corde du cercle obtenu par une coupe transversale de la préforme;

$m^*$ est la quantité de masse capable d'engendrer une pression suffisante à compenser la pression de vapeur de l'agent dopeur, donnée par la relation:

$$m^* = \frac{p\,V}{RT} \cdot M$$

où:

p est la pression de vapeur de l'agent dopeur dans l'état d'affaissement;

V est le volume du ménisque;

T est la température absolue dans l'état d'affaissement;

M est la masse molaire de l'agent dopeur.

2. Méthode selon la revendication 1, caractérisée en ce que ladite couche (2) est réalisée par un agent dopeur colloidal à structure poreuse, déposée à faible température après que les matières constitutives du verre ont été déposées dans la préforme.

3. Méthode selon la revendication 1 ou 2, caractérisée en ce que ladite couche de l'agent dopeur est réalisée en changeant avec continuité selon la fonction $h_0(z)$ le flux des réactifs en phase vapeur, dont l'agent dopeur est obtenu par synthèse.

4. Méthode selon la revendication 1 ou 2, caractérisée en ce que ladite couche de l'agent dopeur est réalisée en changeant avec continuité selon la fonction $h_0(z)$ la vitesse de translation des moyens qui permettent la réaction de synthèse entre les réactifs en phase vapeur, dont l'agent dopeur est obtenu.